# EUROPEAN PATENT APPLICATION

(11) **EP 4 113 409 A1**
(43) Date of publication of application: **04.01.2023**
(21) Application number: 22182051.7
(22) Date of filing: 29.06.2022
(51) Int. Cl.: G06Q 10/10, G06Q 50/18, G06F 21/64, H04L 9/32

(54) **METHOD FOR NOTARIZING A DIGITAL FILE**

(30) Priority: 30.06.2021 IT 202100017240
(71) Applicant: Vision S.r.l., 25124 Brescia (IT)
(72) Inventor: FERRARI, Damiano, I-25124 BRESCIA (IT)
(74) Representative: Chimini, Francesco

(57) **Abstract**

A method for notarizing a digital file, for example a photograph, a video file, or an audio file is implemented by a notarization software application installed on a digital device. The method involves generating the digital file using a digital device, such as a smartphone or tablet, and, at the end of the creation of the digital file, automatically and in real time, applying a hash function to the generated digital file so as to obtain a digital fingerprint of the digital file, storing said digital fingerprint on the blockchain.

## Description

The present invention relates to a method for notarizing a digital file, such as a photograph, video file, or audio file, generated by a digital mobile device, such as a smartphone or tablet.

In situations where it is desired to prove a fact or circumstance objectively through the taking of photographs or videos, it becomes necessary to solve the problem of how to give the videos and photographs legal value.

It is known to notarize a digital file by generating its unique fingerprint and writing it on the blockchain.

However, there always remains the problem of establishing the origin of the digital file that has been notarized, i.e., whether said file actually reproduces the situation, fact, or circumstance which it is desired to prove really occurred in the past.

The object of the present invention is to propose a method for notarizing a digital file that is able to solve this problem.

This object is achieved by a method for notarizing a digital multimedia file according to claim 1.

The dependent claims describe preferred or advantageous embodiments of the notarization method according to the invention.

Further features and advantages of the notarization method according to the invention shall be made readily apparent from the following description of preferred embodiments thereof, provided purely by way of nonlimiting example, with reference to the accompanying figures, wherein:
- Fig. 1 shows a software flowchart implementing the notarization method according to the invention;
- Fig. 2 shows the sequence of actions and related graphical interfaces that the user follows to notarize a digital file or inspect an already notarized and archived file; and
- Fig. 3 shows the structure of a certified email message sent according to an embodiment of the notarization method.

The proposed notarization method is based on a software application, particularly, but not necessarily, designed for mobile devices, such as smartphones, smartwatches, and tablets, hereinafter referred to as the "notarization app."

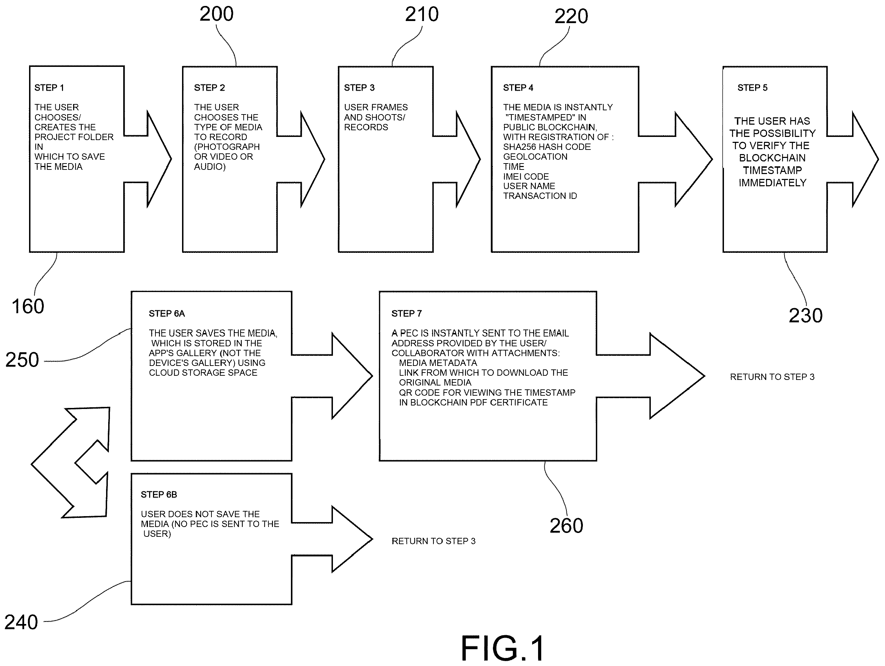

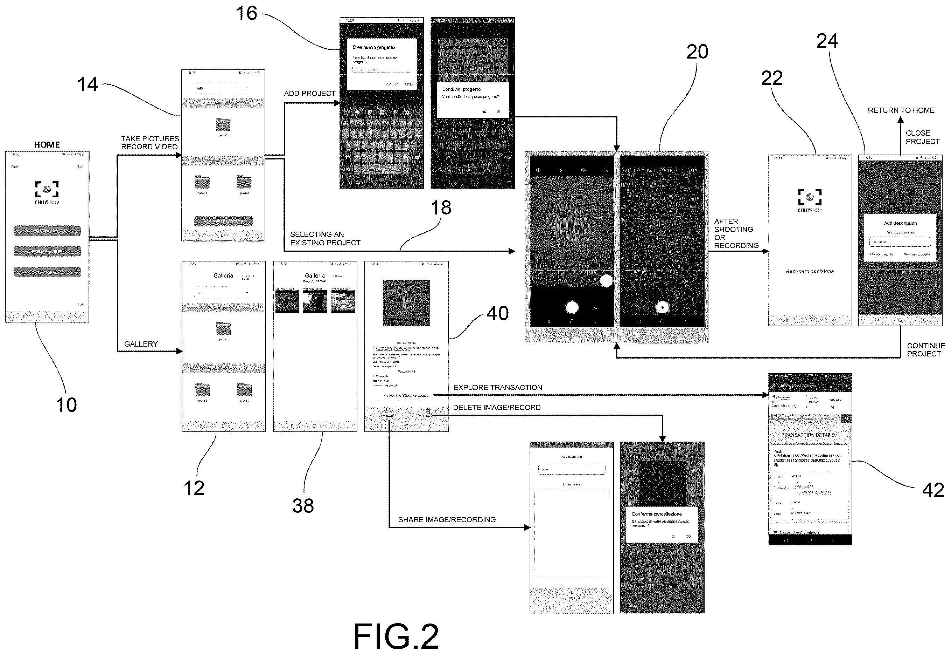

The operation of the notarization app will now be described with reference to the flowcharts in Fig. 1 and 2.

Users must have downloaded the notarization app to their own mobile device (and possibly, as described below, also to a fixed device with a management function) and registered for the service.

To generate and then notarize a new digital file or inspect an already notarized file, the user starts the notarization app (step 10 in Fig. 2).

The user may decide whether to access a gallery containing one or more folders related to previously notarized files (step 12 in Fig. 2), or to generate a new file (step 14 in Fig. 2).

In the latter case, the user may decide whether to create a new project (step 16 in Fig. 2; step 160 in Fig. 1), and possibly a related sub-project, for the new file to be notarized, or to add the new file to an existing project, to be selected (step 18 in Fig. 2).

The notarization app may also ask the user if the new project has to be shared with other individuals and/or collaborators or if it is a private project.

The app then accesses the camera of the mobile device to take a photo or record a video or, in the case of a simple audio file, the audio recorder (step 20, Fig. 2; step 200, Fig. 1).

A photo is then taken, or video or audio recorded (step 210, Fig. 1). The digital file created may be defined a digital multimedia file.

In one embodiment, the notarization app retrieves the position where the mobile device that generated the digital media file is located through the geolocation system of the device (step 22, Fig. 2). In this case, the device must be connected to the Internet via the SIM network (phone card) or Wi-Fi.

It should be noted that the mobile device used must be connected to the Internet during the notarization process. Moreover, the geolocation (GPS) service must be active whenever one wishes to take a certified photo, record audio, or record video.

However, the possible absence of the geolocation data does not preclude the evidentiary value of the multimedia data. In said case, the application may recognize the last available geolocation data.

After taking a photo or making a recording, the user may add a description to the created file (step 24, Fig. 2).

Immediately after creating the multimedia file, the application may automatically apply a hash function to the digital multimedia file in order to obtain a digital fingerprint of the digital multimedia file.

The fingerprint is then stored on the blockchain (step 220, Fig. 1).

In one embodiment, the blockchain is a public blockchain.

According to one aspect of the invention, the creation of the digital fingerprint and storage on the blockchain occur virtually in real time at the moment the multimedia file is generated. In other words, the user should not and may not voluntarily perform any operation on the file just created.

This technical choice ensures that the file that is notarized corresponds exactly to the file that is created, and not to its subsequent processing.

In other words, the information content of the generated digital file may not be changed before the creation of the fingerprint occurs.

The user may immediately verify the contents of the digital file said user has created, which at this point has already been notarized through blockchain (step 230, Fig. 1).

Therefore, for example, if the user has created an incorrect digital file or is otherwise dissatisfied with the result, he or she may only avoid saving the notarized digital file (step 240, Fig. 1) - with the consequence that no certified email will be sent to other parties, as described below - and proceed with the creation of a new digital file (step 210, Fig. 1). In any case, if the user then later modifies the photo, video, or audio, during forensic verification, there will be no coincidence with the hash code of the file, and thus it will be considered a modified file and therefore inauthentic.

In some embodiments, the terms "automatically" and "in real time" do not necessarily mean that the time interval between the creation of the file and the generation of its fingerprint must be almost zero, but they could mean that once the digital multimedia file is created, no other operations on that file are possible other than applying the hash function and writing it on the blockchain.

Note that the time zone is provided by the mobile device used to run the notarization app according to UTC (Universal Time Coordinated) standard RFC 3161 along with the offset relative to the time zone of the smartphone. The timestamp data for certification of the multimedia file are provided by the blockchain at the moment it is digitally notarized.

In one embodiment, the notarized digital file is stored in the cloud managed by the notarization service provider (step 250, Fig. 1). Saving to the cloud allows the notarized digital file to be stored in the gallery of the notarization app and the file to be viewed when desired.

Moreover, in one embodiment, the notarized digital file may be stored, for example in manual mode, on a fixed device, such as a PC, on which a management program resides with which the user may manage the various projects containing notarized files.

Additionally, in one embodiment, the notarized digital file may be sent, e.g., automatically, via a certified email platform (PEC), to individuals whose certified email address has been previously specified by the user, e.g., when registering for the notarization app (step 260, Fig. 1).

In one embodiment, the fingerprint also includes a unique identification of the digital device (IMEI) that created the digital multimedia file.

As mentioned above, the user may at any time verify the notarization by means of the encryption code that is uniquely issued with each notarization of multimedia files.

In other words, the public blockchain used issues a SHA256 hash code that uniquely identifies the multimedia file created and identifies the notarization made with the blocks on the blockchain. The user, by means of the hash code, may verify the digital notarization of the file at any time.

As mentioned above, in some embodiments the notarization service provider also provides the user with a management web platform linked to the mobile application so that all multimedia files created by the mobile application may be managed.

In other words, the dedicated web management system is the environment in which the administrator and the holder of the subscription contract to the notarization service, i.e., the user, may create and manage projects, including creating lists of contributors for specific projects to which certified email messages may be sent, ultimately having governance of the whole system.

In one embodiment, the cloud storage service is implemented with data center located in Europe, according to the requirements of the G.D.P.R.

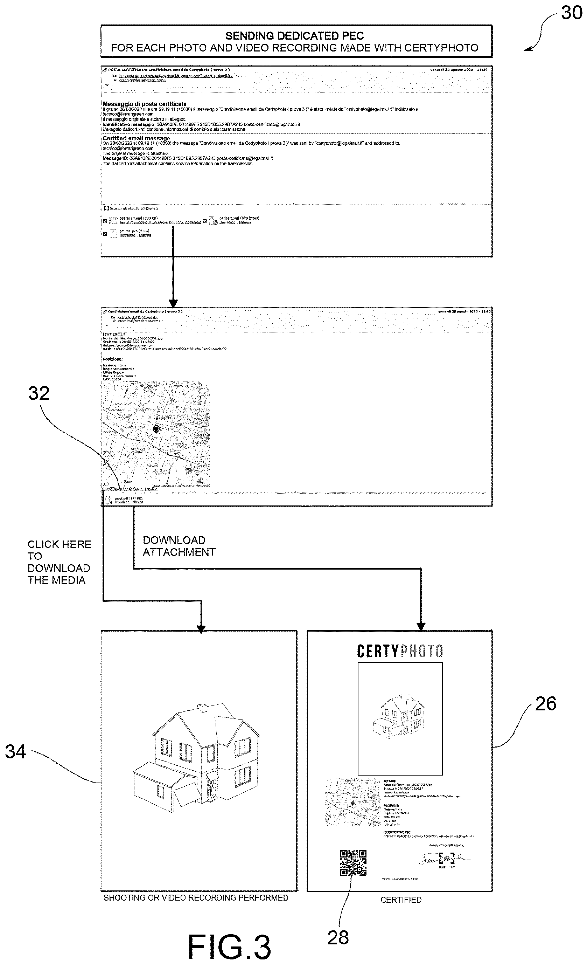

In some embodiments, as shown in Fig. 3, the sent PEC email 30 contains a PDF file 26 that bears all the metadata of the certified digital file. For example, such metadata includes: the blockchain transaction ID, the SHA256 hash code, the IMEI code of the mobile device, the name of the creator of the file, any description entered by the user, the GPS position (address, geographic coordinates), date and time.

In some embodiments, the PEC email may include, for example in the PDF file 26, a QR-code 28 that always allows the digital notarization transaction to be verified.

Moreover, the email may include a link 32 that allows the created digital file 34 to be downloaded.

In some embodiments, if the geolocation is not available, the application retrieves the location where the cell phone was visible to satellites.

If, on the other hand, the user wishes to access an already notarized file, said user selects a folder in the gallery (step 38, Fig. 2) and, from the selected folder, the desired multimedia file (step 40, Fig. 2).

Once the file is selected, the following may be displayed: a preview of the multimedia file, the transaction ID, the file hash, the creation date, the position, and the description, if any.

In one embodiment, the notarization app allows the user to further explore the transaction (step 42, Fig. 2). For example, in addition to the unique transaction identifier, the block number of the blockchain in which the transaction is indelibly inserted, the fingerprint of the file, the mobile device identifier, the addresses of the sender and receiver of the transaction, etc. may be displayed.

The user may also move, delete, or share the selected file.

To summarize, the proposed notarization method allows a media file (photo, audio, video) to be digitally notarized in real time, that is, essentially at the precise moment a photo is taken or a video or audio is recorded, and without the possibility for the user to edit the photo, video, or audio at the time the media is taken or recorded. In fact, the media file once created is automatically notarized on the public blockchain. The media file may be saved within the gallery of the mobile application at the same time as it is notarized. Note that, in one embodiment, each notarized file is saved only within the application gallery, not in the general gallery of the mobile device. In this way, only those who have application passwords may access the gallery.

The same notarized file is saved in the cloud hosted by a third party with guarantees of availability, confidentiality, and assurance.

Moreover, in some embodiments, when the notarized file is saved, one or more PEC emails are automatically sent to email addresses specified by the user.

For example, each email may contain a link pointing to the original photo, video, audio, and a PDF file with all the metadata of the media inside (e.g., transaction id, pec id, blockchain hash, longitude, latitude, time, phone IMEI, name of the user who took the photo for the unique identification of the media).

In some embodiments, the PEC email may include, for example in the PDF file, a QR code that always allows the digital notarization transaction to be verified.

In some embodiments, when accessing the notarization app, the user is asked to enter the code, password, sign, or facial recognition used for activation of the mobile device. This is to ensure that the one who is using the app is the one who governs and comes with the mobile device.

A person skilled in the art may make to the embodiments of the notarization method according to the invention several changes, adjustments, adaptations, and replacements of elements with other functionally equivalent ones in order to meet incidental needs, without departing from the scope of the following claims. Each of the features described as belonging to a possible embodiment may be obtained independently of the other described embodiments.

## Claims

1. A method for notarizing a digital file, for example a photograph, a video file, an audio file, implemented by a notarization software application installed on a digital device, comprising the steps of:
a) generating the digital file using a digital device, for example a smartphone or a tablet,
b) at the end of the creation of the digital file, automatically and in real time:
- applying a hash function to the digital file generated so as to obtain a fingerprint of the digital file;
- storing said digital fingerprint on blockchain.

2. A method according to claim 1, wherein between step a) and step b) the information content of the digital file generated cannot be modified.

3. A method according to claim 1 or 2, wherein the notarized digital file is stored on a remote server.

4. A method according to claim 3, wherein the notarized digital file is saved in a gallery of the software application.

5. A method according to claim 3 or 4, wherein, once the notarized digital file has been saved on the remote server, the notarized digital file is sent automatically through a certified email platform (PEC) to subjects whose certified email address has been previously specified by the user, for example during the step of registering the notarization software application.

6. A method according to any one of the preceding claims, wherein the digital fingerprint includes the date and time at which the digital file was created.

7. A method according to any one of the preceding claims, wherein the digital fingerprint further includes the geolocation of the position in which the digital file was created and/or a unique identification of the digital device which created the digital file.

8. A method according to any one of claims 5-7, wherein the certified email message sent contains a file, for example in PDF format, which reports metadata of the notarized digital file, the metadata comprising one or more from: ID of the blockchain transaction, hash code, IMEI code of the digital device, name of the file creator, any description entered by the user, GPS position of the digital device at the digital file creation time, digital file creation date and time.

9. A method according to any one of claims 5-8, wherein the certified email message sent includes a QR-code which allows to verify the digital notarization transaction.

10. A method according to any one of claims 5-9, wherein the certified email message sent includes a link allowing to download the digital file created.

11. A software application loadable into the memory of a digital device, in particular a mobile digital device, for example a smartphone, and configured to access a photo camera and/or an audio recorder of the digital device and to implement the notarization method according to any one of the preceding claims.
